# EUROPEAN PATENT SPECIFICATION

(11) **EP 2 839 691 B1**
(45) Date of publication and mention of the grant of the patent: **18.07.2018**
(21) Application number: 13719346.2
(22) Date of filing: 18.04.2013
(51) Int. Cl.: H04W 12/12, H04W 4/021, G06Q 20/32, G06F 21/31, H04W 4/14

(54) **ACCOUNT SECURITY PROTECTION METHOD AND SYSTEM**
VERFAHREN UND SYSTEM ZUM SCHUTZ DER SICHERHEIT VON KONTEN
PROCEDE ET SYSTEME POUR LA PROTECTION DE LA SECURITE DE COMPTES

(30) Priority: 19.04.2012 CN 201210117140; 17.04.2013 US 201313864932
(43) Date of publication of application: 25.02.2015
(73) Proprietor: Alibaba Group Holding Limited, Grand Cayman (KY)
(72) Inventor: CAI, Jingzhu, Hangzhou (CN)
(74) Representative: Freeman, Jacqueline Carol
(86) International application number: PCT/US2013/037212
(87) International publication number: WO 2013/158905

(56) References cited:
- WO-A1-03/098525
- US-A1- 2009 012 898
- US-A1- 2011 282 789

## Description

### FIELD OF THE INVENTION

The present application relates to an account security protection method and system.

### BACKGROUND OF THE INVENTION

The rapid development of the Internet has brought about enormous change for many industries. For example, in the banking sector, users can perform a variety of transactions at automated teller machines over the Internet. The transactions can include deposits, withdrawals and account transfers. Users can also perform a variety of transactions via online banking, including account transfers, payments, and purchases, without going to a physical bank. However, the Internet has also created opportunities for lawbreakers. Networks are frequently used to steal funds from user accounts (including online and offline accounts). For example, the lawbreakers can steal funds at automated teller machines through offline misappropriation of users' bank cards. The lawbreakers can also engage in account theft via misappropriation of the users' account passwords. Often, users are unable to detect that their accounts have been misappropriated in real time, and by the time a user discovers that their account has been misappropriated, the losses are often already very significant. Existing antitheft methods typically include installation of cameras in designated locations, or manual inspection methods. Not only are these antitheft methods relatively expensive, the antitheft methods involve delayed processing resulting in a difficulty to recover user losses.

Therefore, a timely discovery and processing of account abnormalities could increase account security protection and reduce user losses.

The invention is defined in the claims.

### BRIEF DESCRIPTION OF THE DRAWINGS

Various embodiments of the invention are disclosed in the following detailed description and the accompanying drawings.
FIG. 1 is a flow chart illustrating an embodiment of an account security protection method.
FIG. 2 is a flow chart illustrating an embodiment of a user notification method.
FIG. 3 is a structural block diagram illustrating an embodiment of an account security protection device.
FIG. 4 is a structural block diagram illustrating an embodiment of a notification unit.
FIG. 5 is a structural block diagram illustrating an embodiment of an account security protection system.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

In some embodiments, in the event that a user initiates an account operation, an assessment is made whether a current location of the user and a location where an account is being operated are the same location. The assessment includes determining whether the distance between the current location of the user and the location where the account is being operated is within a predetermined distance threshold value. In the event that the location of the user and the location where the account is being operated are not within the predetermined distance threshold value, the user is immediately notified, so that the user can be made aware of the account abnormality to promptly handle the situation. Thus, the prompt notification can reduce the occurrence of account theft, and increase the security of the user's account.

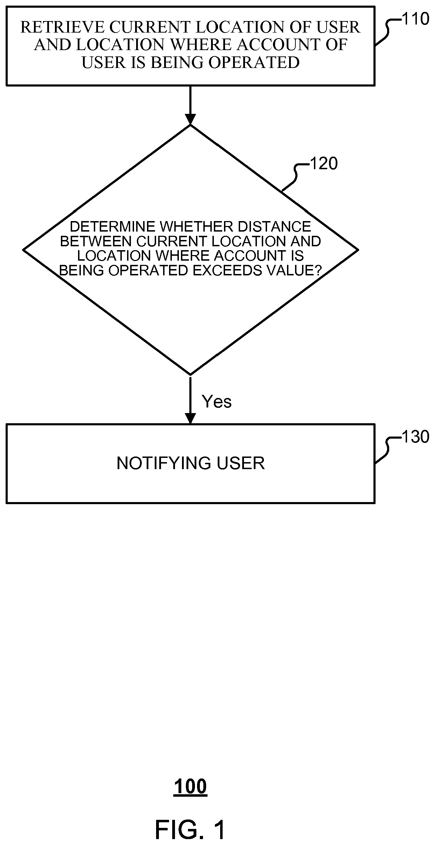

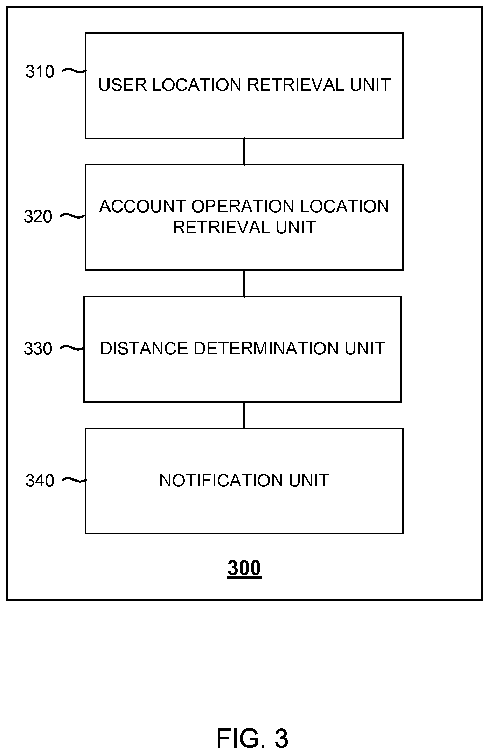

FIG. 1 is a flow chart illustrating an embodiment of an account security protection method. The method 100 can be implemented in system 300 of FIG. 3. The method 100 comprises:

In 110, a server is configured to retrieve a current location of a user and a location where the user's account is being operated. In some embodiments, the server accesses a database to obtain the coordinates of the service point and the registered mobile device. In the event that the two coordinates have a distance that exceeds a predetermined distance, and the server initiates a verification method to warn the user's registered mobile device.

In some embodiments, in the event that the user's current location and the location of the registered mobile device are not the same location, the server initiates the verification method.

For example, the current location of the user can be retrieved based on a location of a mobile device of the user. In this example, the mobile device is a mobile phone associated with the user's account, where the association can be made at the time the user registers for the account.

In some embodiments, the database used to do the comparison includes: a first table having an ID, a service point machine code, and a corresponding service point address; and a second table having a bank card number and a corresponding registered mobile device phone number.

In the event that an unauthorized user uses a bank card on an ATM, the server obtains the location of the service point using the first table, and obtains the current location of the mobile device using the second table. The server compares the user's location of operation of the service point and current location of the mobile device. In some embodiments, in order to obtain the current location of the mobile device, the server obtains the location of the mobile device in conjunction with a map and determines the latitude and the longitudinal coordinates to determine whether the distance between the location of the service point being operated and the location of the user's mobile device exceeds the predetermined distance. In the event that the distance between the location of the service point being operated and the location of the user's mobile device exceeds the predetermined distance, the server sends a warning or operating instructions to the registered mobile device.

In some embodiments, the mobile device can be a portable equipment having wireless communication functions and positioning functions (via a global positioning system (GPS) positioning or location-based services (LBS) positioning). The association of the mobile device with the user's account is implemented based on an establishment of a correspondence between the mobile device and the user's account in a back-end database. The correspondence between the mobile device and the user's account is regarded as an association between the mobile device and the user's account. In some embodiments, for example, on an Alipay platform for users having an Alipay Account, the correspondence between the Alipay Account and the user's mobile phone number to which the Alipay Account is linked is recorded in the Alipay platform, and the correspondence can also be regarded as an association between the mobile device and the user's account. The above example does not limit the methods of establishing an association.

In some embodiments, in the event that an association between the mobile device and the user's account exists, the server is configured to determine whether the mobile device currently used is correct based on the association between the mobile device and the user's account. For example, in some embodiments, the server is configured to assess whether the mobile phone number to which the user's account is linked relates to the mobile device being used. In another example, the server is configured to request the mobile device (for example, via application programming interface (API) calls) to read the hardware identification number and return the value read, compare the hardware identification number of the mobile device with a hardware identification number (for example, unique identifier assigned to the device by the manufacturer) previously successfully verified during the user registration process. In the event that the hardware identification numbers are the same, the mobile device is considered to be correct, and the server permits the mobile device to retrieve the user's current location. In the event that the hardware identification numbers are not the same, the server is configured to consider the mobile device to be incorrect and reject the retrieval of the user's current location.

The current location of the user is obtained using the mobile device of the user via GPS positioning by a GPS module included in the mobile device, using API calls. The current location of the user can also be obtained via LBS positioning by a LBS module included in the mobile device. The server uses the current device used by the user. The device can be online or offline. In the event that the device is online, the server uses the device's IP address to determine appropriate data. In the event that the device is offline, the server accesses the database tables to obtain a corresponding address and coordinates.

LBS positioning has at least two meanings. The first meaning of LBS positioning refers to determining the geographical location of the mobile device or user. The second meaning of LBS positioning refers to providing various types of information services related to the location. In other words, as the various types of positioning-related service systems refer to simply "positioning services," the LBS positioning accomplishes two main functions of positioning and services with the support of the Internet or a wireless network. The LBS module in the mobile device utilizes wireless communication networks of mobile telecommunications providers (such as GSM networks or CDMA networks) and/or an external positioning method (such as GPS) to retrieve a mobile device end user's location information with the support of a geographic information system (GIS) to provide the user with the relevant services.

The server obtains the registered mobile phone number and determines whether the device has GPS capabilities. In the event that the device does not have GPS capabilities, the server uses the mobile device's wireless communications network to obtain a location. In the event that the device has GPS capabilities, the server sends instructions to the current location of the mobile device. The mobile device end user's location information can include geographical coordinates or geodetic coordinates.

The above-described method of retrieving the user's current location is illustrative, and the present application is not limited to the above-described method.

In some embodiments, the location where the user's account is being operated corresponds to an offline location. In the event that the location corresponds to an offline location, the location where the user's account is being operated can be retrieved based on locating a machine code of equipment being operated using the LBS.

As an example, after receiving a message from the server, the user can enter 0 to "continue" and "cancel", enter 1 to "stop", or enter 2 to "report a crime." The server will carry out actions according to the user's selection. In the event that the server receives "0", the server will take no actions, in the event that the server receives "1," the server will lock the account, and in the event that the server receives "2", the server will report the crime to the local authorities, e.g. police, using a voice-based crime reporting system.

For example, a user can use their bank card to complete a transaction at an automated teller machine. A location of the current service point (the location where the user's account is being operated) can be obtained based on the machine code of the automated teller machine on which the user completes the transaction. In another example, the corresponding service point address can be obtained from a previously established service point information database based on the machine code of the automated teller machine. Based on the service point address and map data, longitudinal and latitudinal coordinate values can be read, and the specific location of the current service point can be determined based on the read coordinate values.

In the event that the user uses an ATM to access the account, the server checks whether the entered code is correct, and at the same time determines whether the distance between the ATM's location and the location of the user's registered mobile device are within a predetermined value.

In some embodiments, the location where the user's account is being operated can correspond to an online location. In the event that the location corresponds to the online location, the location where the user's account is being operated can be retrieved based on obtaining an internet protocol (IP) address of the operated equipment.

For example, in the event that a user uses a personal computer (PC) to log into the Alipay platform to complete a transaction using the user's Alipay account, the location where the user's Alipay account is being operated can be determined by obtaining the IP address of the user's PC.

In some embodiments, the server uses a pre-established database to determine the coordinates of the user's PC based on the IP address of the user's PC. The coordinates of the user's PC are compared with the coordinates of the registered mobile device. In some embodiments, the coordinates corresponds with the location.

In some embodiments, the established database has a table including ID, machine code, corresponding IP address, and corresponding address location.

In 120, the server is configured to determine whether a distance between the user's current location and the location where the user's account is being operated exceeds a predetermined distance threshold value.

In 130, in the event that the distance between the user's current location and the location where the user's account is being operated exceeds the predetermined distance threshold value, the server is configured to notify the user.

For example, the current location of the user and the location where the user's account is being operated are respectively expressed as coordinate points representing locations on a map. In other words, each coordinate point can correspond to a map coordinate values (for example, longitude - latitude values). The distance between the two locations can be calculated based on the absolute value of the difference obtained by subtracting the coordinate value of the user's current location from the coordinate value of the location where the user's account is being operated. In the event that the distance between the two locations exceeds a predetermined distance threshold value, the server is configured to notify the user. In some embodiments, the predetermined distance threshold value can be 5 meters.

In some embodiments, the notification of the user can include transmitting a first informational message to the user's mobile device. The first informational message can include prompting the user with an option of terminating the account operation.

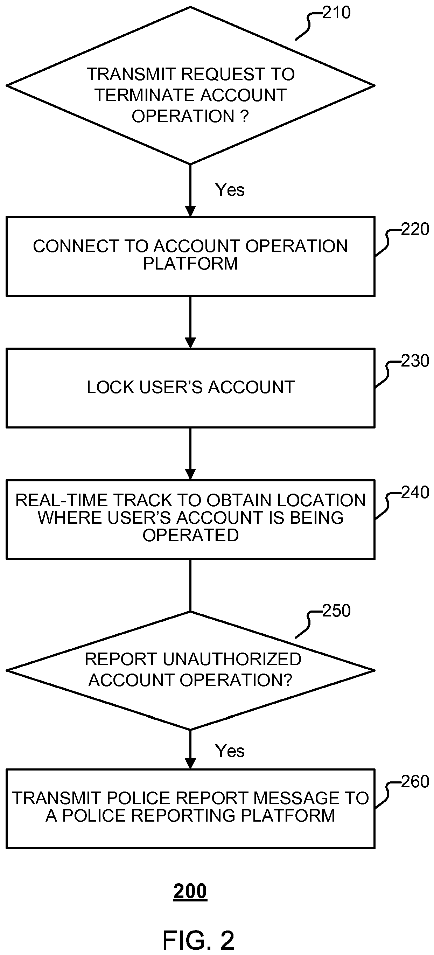

FIG. 2 is a flow chart illustrating an embodiment of a user notification method. The method 200 can be an implementation of operation 130 of FIG. 1. The method 200 includes:

In 210, the server is configured to contact the user with an option of transmitting a request to terminate the account operation.

In 220, in the event that the request to terminate the account operation is received from the user, the server is configured to connect to an account operation platform.

In some embodiments, in the event that the user operates the account, the server invokes the verification method, and based on the value returned by the user, the server uses SMS to send different actions to the account owner. In the event that the account owner sends a "0," the server continues to operate, in the event that the account owner sends a "1," the server notifies the bank to lock the account, and record the facial features of the unauthorized user and initiates the reporting of a crime.

The account can be online or offline. The offline type generally corresponds to bank cards, and the online type generally corresponds to web-based accounts. In the event that a bank card is used, the server will report that the bank card is used without authorization, the account related to the bank card will be locked, and other actions are performed depending on the bank which issues the bank card.

In 230, the server is configured to lock the user's account.

For example, in the event that the current location of the user is determined based on the mobile phone of the user, and the distance between the current location of the user and the location where the bank card (to which the mobile phone is linked) is being operated exceeds the predetermined distance threshold value of 5 meters, the server can transmit a text message to the user's mobile phone.

In one example, the content of the text message can be "Your bank card ending with the number 2345 is being used at 123 Main Street. Should the operation be terminated?" In some embodiments, the message can include two options "terminate" and "continue." The "terminate" option can relate to a submission of a request to terminate the account operation. In the event that the "terminate" option is selected, the server can connect to the banking system to transmit a request to terminate the account operation and lock the bank card. In the event that the user's distance from the ATM exceeds the predetermined distance, the verification method is initiated.

In another example, in the event that the distance between the user's current location via the user's mobile phone and the location where the user's Alipay account (the account being linked to the bank card) is being operated exceeds a predetermined distance threshold value of 1 meter, the server can transmit a text message to the user's mobile phone. The content of the text message can be "Your Alipay account is being used at 123 Main Street. Should the operation be terminated?" The message can also include the two options "terminate" and "continue." The "terminate" option can refer to submitting a request to terminate the account operation. In the event that the "terminate" option is selected, the server can connect to the banking system to transmit a request to terminate the account operation and lock the current Alipay account.

In yet another example, in the event that the distance between the user's current location via the user's mobile phone and the location where the bank card (the mobile phone is linked to the bank card) is being operated exceeds a predetermined distance threshold value of 5 meters, the server is configured to use a network telephone to call the user's linked mobile phone directly. In the event that the user answers the mobile phone, a voice message is delivered. The content of the voice message can correspond to the content of the text messages described in the above examples. In addition, the user can perform operations on the account based on the options provided in the voice message. For example, the user can be instructed to press 1 to issue a request to terminate the account operation or press 0 to continue the account operation. The "terminate" option can refer to submitting a request to terminate the account operation. In the event that the user presses 1 to select the "terminate" option, the server can connect to the banking system to transmit a command to terminate the account operation based on the relevant bank card account information in the database and lock the bank card.

In 240, the server is configured to real-time track to obtain the location where the user's account is being operated.

In some embodiments, in the event that real-time tracking is performed on the registered mobile device that is operating the user's account, the server obtains the location data in real-time.

In 250, the server is configured to transmit a second informational message to the mobile device of the user. The second informational message can include location information where the user's account is being operated, and prompt the user with an option to report the unauthorized account operation to the police.

In 260, in the event that the user determines to report the unauthorized account operation to the police, the server is configured to generate a police report message and transmit the police report message to a police reporting platform.

For example, as discussed above when the user sends a "2," the server receives the command and initiates the recording of the person's features, and obtains coordinates, bank name and account number. The server also sends a message to the police or security platform. The message can be sent via voice message or SMS. For example, the message includes: ** bank card ending with the number 1235 is being used without authorization at ** street, please dispatch immediately. Reported by [name].

In some embodiments, the server can be configured to perform real-time tracking to obtain a location where an unauthorized user is using the user's account and notify the user. In the event that the user reports the unauthorized account operation to the police, the server can be configured to notify the police reporting platform based on the location information of the unauthorized user's unauthorized use of the user account to facilitate obtaining a location and capture the unauthorized user by the police or relevant personnel while conserving manpower and material costs.

As an example, after the user initiates a request to terminate the account operation and lock the user's account at substantially the same time, the server is configured to perform tracking to obtain the location where the user's account is being operated, and transmit the location via the second informational message to the linked user's mobile phone. The content of the second informational message can be "Your Bank card ending in 2345 has been misappropriated at 123 Main Street. Do you wish to report the misappropriation to the police?". The text message can also include the two options of "Report to police" and "Cancel." In the event that the user selects the "Report to police" option, the server is configured to transmit a police reporting request. The police reporting message can be in the form of a text message transmitted to a police reporting platform configured to receive reports by text messages or the like. The content of the police reporting message can be "A bank card has been misappropriated by an unauthorized user at 123 Main Street. Please dispatch someone quickly. Reported by Bob Smith, (650)-555-5555."

In some embodiments, the user's account may include any online or offline user account, such as a bank card account, an Alipay account, a Taobao account, an instant messaging (IM) account etc.

By determining the user's current location and the location where the user's account is being operated, informational messages can be sent to the user when the distance between the two locations exceeds a predetermined value, for example, when the location of the user and the location where the account is being operated are not the same place. Thus, the use of wireless communication resources created by frequent transmissions of information can reduce costs.

FIG. 3 is a structural block diagram illustrating an embodiment of an account security protection device. The device 300 can be configured to implement the method 100 of FIG. 1. The device 300 includes a user location retrieval unit 310, an account operation location retrieval unit 320, a distance determination unit 330, and a notification unit 340.

The user location retrieval unit 310 is configured to retrieve a current location of a user.

The account operation location retrieval unit 320 is configured to retrieve a location where the user's account is being operated.

The distance determination unit 330 is configured to determine whether a distance between the current location of the user and the location where the user's account is being operated exceeds a predetermined distance threshold value.

In the event that the distance between the current location of the user and the location where the user's account is being operated exceeds a predetermined distance threshold value, the notification unit 340 is configured to notify the user.

In some embodiments, the current location of the user can be retrieved based on obtaining the location of the mobile device of the user. In this example, the notification unit 340 can be configured to connect to the user location retrieval unit 310, and associate the mobile device with the user's account.

In some embodiments, the location where the user's account is currently being operated can include an offline location. The location where the user's account is being operated can be retrieved based on a machine code of the operated equipment using LBS.

In some embodiments, the location where the user's account is being operated can include an online location. The location where the user's account is being operated may be retrieved based on the location of the IP address of the equipment being operated.

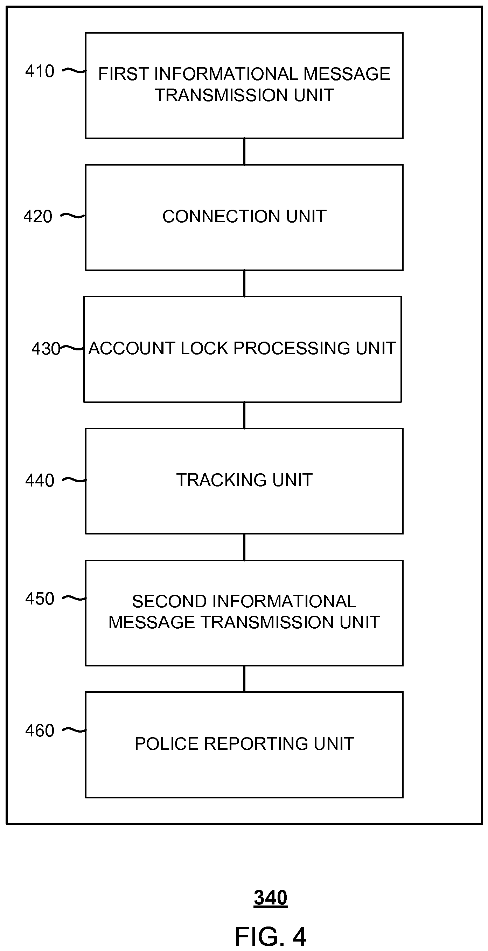

FIG. 4 is a structural block diagram illustrating an embodiment of a notification unit. The notification unit 340 can include a first informational message transmission unit 410, a connection unit 420, an account lock processing unit 430, a tracking unit 440, a second informational message transmission unit 450 and a police reporting unit 460.

The first informational message transmission unit 410 is configured to transmit a first information message to the mobile device of the user. The first informational message can include an option of transmitting a request to terminate the account operation.

In the event that the user transmits a request to terminate the account operation, a connection unit 420 is configured to connect to the relevant account operation platform.

In the event that the connection unit 420 is connected to the relevant account operation platform, an account lock processing unit 430 is configured to lock the user's account.

The tracking unit 440 is configured to perform real-time tracking to obtain the location where the user's account is being operated.

The second informational message transmission unit 450 is configured to transmit a second informational message to the mobile device of the user. The second informational message can include the location where the user's account is being operated, and prompt the user with an option to report the unauthorized account operation to the police or relevant authorities.

In the event that the user determines to report the unauthorized account operation to the police or relevant authorities, the police reporting unit 460 is configured to generate a police report message and transmit the police report message to a police reporting platform.

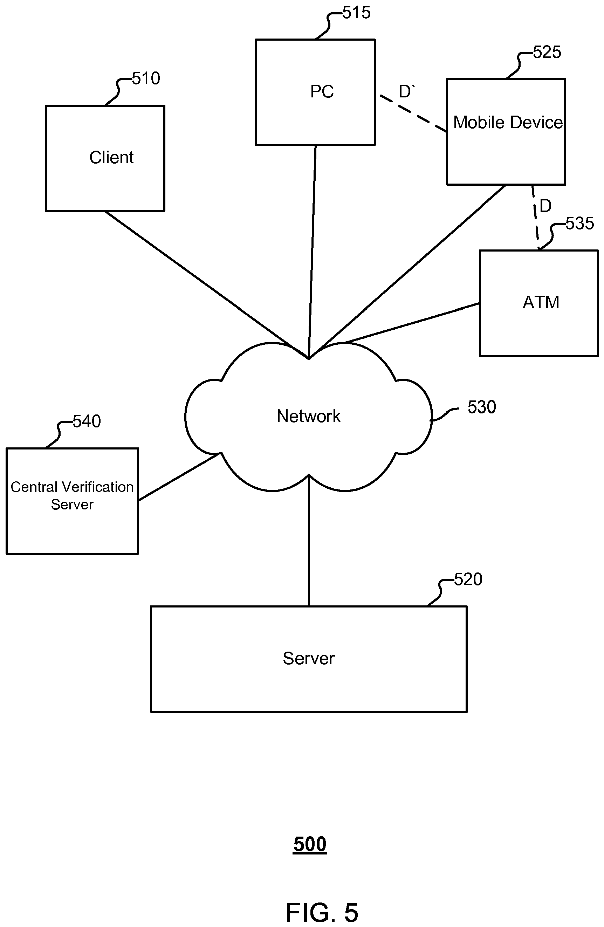

FIG. 5 is a structural block diagram illustrating an embodiment of an account security protection system. The system 500 comprises a client 510 connected to a server 520 via a network 530. A personal computer (PC) 515, a mobile device 525, an automated teller machine (ATM) 535, and a central verification server 540 are connected to the server 520 via the network 530. The system 300 of FIG. 3 can be used to implement the server 520. The user can utilize the client 510.

A distance D corresponds to the distance between the ATM 535 and the mobile device 525, and a distance D' corresponds to the distance between the PC 515 and the mobile device 525. In other words, D and D' correspond to distances between the mobile device 525 and service point devices (the PC 515 and the ATM 535). The system determines the location of the service point device and the location of the registered mobile device to determine the distance between the two locations.

The units described above can be implemented as software components executing on one or more general purpose processors, as hardware such as programmable logic devices and/or Application Specific Integrated Circuits designed to perform certain functions or a combination thereof. In some embodiments, the units can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present invention. The units may be implemented on a single device or distributed across multiple devices. The functions of the units may be merged into one another or further split into multiple sub-units.

The methods or algorithmic steps described in light of the embodiments disclosed herein can be implemented using hardware, processor-executed software modules, or combinations of both. Software modules can be installed in random-access memory (RAM), memory, read-only memory (ROM), electrically programmable ROM, electrically erasable programmable ROM, registers, hard drives, removable disks, CD-ROM, or any other forms of storage media known in the technical field.

Although the foregoing embodiments have been described in some detail for purposes of clarity of understanding, the invention is not limited to the details provided. There are many alternative ways of implementing the invention defined by the appended claims. The disclosed embodiments are illustrative and not restrictive.

## Claims

1. An account security protection method, comprising:
retrieving (110) a current location of a user and a location where the user's account is being operated;
determining (120), using a processor, whether a distance between the current location of the user and the location where the user's account is being operated exceeds a predetermined distance threshold, comprising:
in response to a determination that the location where the user's account is being operated is an online location:
obtaining, via an IP address of a personal computer, PC, (515) a location of the PC (515) based on a pre-established database; and
determining the location of the PC (515) as the location where the user's account is being operated; and
in response to a determination that the location where the user's account is being operated is an offline location:
obtaining a location of a service point machine code of the offline location based on a table; and
assigning the location of the service point machine code of the offline location to the location where the user's account is being operated; and
in response to a determination that the distance between the current location of the user and the location where the user's account is being operated exceeds the predetermined distance threshold, notifying (130), using the processor, the user, wherein the notifying of the user further comprises:
transmitting a first informational message to a mobile device (525) of the user, the first informational message comprising an option of transmitting (210) a request to terminate the account operation;
performing real-time tracking (240) to obtain the location where the user's account is being operated; and
transmitting a second informational message to the mobile device (525) of the user, wherein the second informational message includes location information where the user's account is being operated, and prompts the user with an option to report (250) an unauthorized account operation to the police, and wherein the second informational message is separate from the first informational message.

2. The method as described in claim 1, further comprising:
associating a mobile device (525) with the user's account, wherein the retrieving of the current location of the user includes locating the mobile device (525) associated with the user's account.

3. The method as described in claim 1:
wherein the location where the user's account is being operated is retrieved based on a location of a machine code of a mobile device (525) being operated using location-based services (LBS).

4. The method as described in claim 1, further comprising before retrieving the current location of the user, receiving a verification request from a service point.

5. The method as described in claim 1, further comprising before retrieving the current location of the user, detecting that the user's account is being operated at a service point.

6. The method of claim 1, wherein the notify of the user further comprises:
in response to a determination that the user transmits the request to terminate the account operation:
connect to an account operation platform; and
lock the user's account.

7. The method of claim 1, wherein the notify of the user further comprises:
in response to a determination that the user determined to report the unauthorized account operation to the police, transmit a message to a reporting platform.

8. An account security protection system, comprising:
at least one processor configured to:
retrieve (110) a current location of a user;
retrieve a location where the user's account is being operated;
determine (120) whether a distance between the location of the user and the location where the user's account is being operated exceeds a predetermined distance threshold, comprising:
in response to a determination that the location where the user's account is being operated is an online location:
obtain, via an IP address of a personal computer, PC, (515) a location of the PC (515) based on a pre-established database; and
determine the location of the PC (515) as the location where the user's account is being operated; and
in response to a determination that the location where the user's account is being operated is an offline location:
obtain a location of a service point machine code of the offline location based on a table; and
assign the location of the service point machine code of the offline location to the location where the user's account is being operated; and
in response to a determination that the distance between the location of the user and the location where the user's account is being operated exceeds the predetermined distance threshold, notify (130) the user, wherein the notifying of the user further comprises:
transmit a first informational message to a mobile device of the user, the first informational message comprising an option of transmitting (210) a request to terminate the account operation;
perform real-time tracking (240) to obtain the location where the user's account is being operated; and
transmit a second informational message to the mobile device of the user, wherein the second informational message includes location information where the user's account is being operated, and prompts the user with an option to report (250) an unauthorized account operation to the police, and wherein the second informational message is separate from the first informational message; and
a memory coupled to the at least one processor and configured to provide the at least one processor with instructions.

9. The system as described in claim 8, wherein the processor is further configured to:
associate a mobile device with the user's account, wherein the retrieving of the current location of the user includes locate the mobile device associated with the user's account.

10. The system as described in claim 8:
wherein the location where the user's account is being operated is retrieved based on a location of a machine code of a mobile device being operated using location-based services (LBS).

11. The system as described in claim 8, wherein the notify of the user further comprises:
in response to a determination that the user transmits the request to terminate the account operation:
connect to an account operation platform; and
lock the user's account.

12. The system as described in claim 8, wherein the notify of the user further comprises:
in response to a determination that the user determined to report the unauthorized account operation to the police, transmit a message to a reporting platform.

13. A computer program product for account security protection, the computer program product being embodied in a non-transitory computer readable storage medium and comprising computer instructions for:
retrieving (110) a current location of a user and a location where the user's account is being operated;
determining (120) whether a distance between the location of the user and the location where the user's account is being operated exceeds a predetermined distance threshold, comprising:
in response to a determination that the location where the user's account is being operated is an online location:
obtaining, via an IP address of a personal computer, PC, (515) a location of the PC based on a pre-established database; and
determining the location of the PC (515) to the location where the user's account is being operated; and
in response to a determination that the location where the user's account is being operated is an offline location:
obtaining a location of a service point machine code of the offline location based on a table; and
assigning the location of the service point machine code of the offline location to the location where the user's account is being operated; and
in response to a determination that the distance between the location of the user and the location where the user's account is being operated exceeds the predetermined distance threshold, notifying (130) the user, wherein the notifying of the user further comprises:
transmitting a first informational message to a mobile device of the user, the first informational message comprising an option of transmitting (210) a request to terminate the account operation;
performing real-time tracking (240) to obtain the location where the user's account is being operated; and
transmitting a second informational message to the mobile device of the user, wherein the second informational message includes location information where the user's account is being operated, and prompts the user with an option to report (250) an unauthorized account operation to the police, and wherein the second informational message is separate from the first informational message.

## Patentansprüche

1. Verfahren zum Schutz der Sicherheit eines Kontos, umfassend:
Abrufen (110) eines gegenwärtigen Standorts eines Benutzers und eines Standorts, an dem auf das Konto des Benutzers zugegriffen wird;
Bestimmen (120), unter Verwendung eines Prozessors, ob eine Entfernung zwischen dem gegenwärtigen Standort des Benutzers und dem Standort, an dem auf das Konto des Benutzers zugegriffen wird, eine vorgegebene Entfernungsschwelle übersteigt, umfassend:
als Reaktion auf eine Bestimmung, dass der Standort, an dem auf das Konto des Benutzers zugegriffen wird, ein Online-Standort ist:
Erhalten, über eine IP-Adresse eines Personalcomputers, PC, (515) eines Standorts des PC (515) auf der Basis einer zuvor erstellten Datenbank; und
Bestimmen des Standorts des PC (515) als den Standort, an dem auf das Konto des Benutzers zugegriffen wird; und
als Reaktion auf eine Bestimmung, dass der Standort, an dem auf das Konto des Benutzers zugegriffen wird, ein Offline-Standort ist:
Erhalten eines Standorts eines Servicestellen-Maschinencodes des Offline-Standorts auf der Basis einer Tabelle; und
Zuordnen des Standorts des Servicestellen-Maschinencodes des Offline-Standorts zu dem Standort, an dem auf das Konto des Benutzers zugegriffen wird; und
als Reaktion auf eine Bestimmung, dass die Entfernung zwischen dem gegenwärtigen Standort des Benutzers und dem Standort, an dem auf das Konto des Benutzers zugegriffen wird, die vorgegebene Entfernungsschwelle übersteigt, Benachrichtigen (130) des Benutzers unter Verwendung des Prozessors, wobei das Benachrichtigen des Benutzers ferner Folgendes umfasst:
Senden einer ersten Informationsnachricht an eine mobile Vorrichtung (525) des Benutzers, wobei die erste Informationsnachricht eine Option umfasst, eine Aufforderung zur Beendigung des Kontozugriffs zu senden (210);
Durchführen von Echtzeit-Verfolgung (240), um den Standort zu erhalten, an dem auf das Konto des Benutzers zugegriffen wird; und
Senden einer zweiten Informationsnachricht an die mobile Vorrichtung (525) des Benutzers, wobei die zweite Informationsnachricht Standortinformationen darüber beinhaltet, von wo auf das Konto des Benutzers zugegriffen wird, und dem Benutzer eine Option bietet, der Polizei einen unautorisierten Kontozugriff zu melden (250), und wobei die zweite Informationsnachricht separat von der ersten Informationsnachricht ist.

2. Verfahren nach Anspruch 1, ferner umfassend:
Assoziieren einer mobilen Vorrichtung (525) mit dem Konto des Benutzers, wobei das Abrufen des gegenwärtigen Standorts des Benutzers das Lokalisieren der mit dem Konto des Benutzers assoziierten mobilen Vorrichtung (525) beinhaltet.

3. Verfahren nach Anspruch 1:
wobei der Standort, an dem auf das Konto des Benutzers zugegriffen wird, auf der Basis eines Standorts eines Maschinencodes einer mobilen Vorrichtung (525), auf die zugegriffen wird, unter Verwendung von standortbezogenen Diensten (LBS) abgerufen wird.

4. Verfahren nach Anspruch 1, ferner umfassend, vor dem Abrufen des gegenwärtigen Standorts des Benutzers, das Empfangen einer Verifizierungsaufforderung von einer Servicestelle.

5. Verfahren nach Anspruch 1, ferner umfassend, vor dem Abrufen des gegenwärtigen Standorts des Benutzers, das Erfassen, dass an einer Servicestelle auf das Konto des Benutzers zugegriffen wird.

6. Verfahren nach Anspruch 1, wobei das Benachrichtigen des Benutzers ferner Folgendes umfasst:
als Reaktion auf eine Bestimmung, dass der Benutzer die Aufforderung zur Beendigung des Kontozugriffs sendet:
Verbinden mit einer Kontobetriebsplattform; und
Sperren des Kontos des Benutzers.

7. Verfahren nach Anspruch 1, wobei das Benachrichtigen des Benutzers ferner Folgendes umfasst:
als Reaktion auf eine Bestimmung, dass der Benutzer entschied, der Polizei den unautorisierten Kontozugriff zu melden, Senden einer Nachricht an eine Meldeplattform.

8. System zum Schutz der Sicherheit eines Kontos, umfassend:
mindestens einen Prozessor, der für Folgendes konfiguriert ist:
Abrufen (110) eines gegenwärtigen Standorts eines Benutzers;
Abrufen eines Standorts, an dem auf das Konto des Benutzers zugegriffen wird;
Bestimmen (120), ob eine Entfernung zwischen dem Standort des Benutzers und dem Standort, an dem auf das Konto des Benutzers zugegriffen wird, eine vorgegebene Entfernungsschwelle übersteigt, umfassend:
als Reaktion auf eine Bestimmung, dass der Standort, an dem auf das Konto des Benutzers zugegriffen wird, ein Online-Standort ist:
Erhalten, über eine IP-Adresse eines Personalcomputers, PC, (515) eines Standorts des PC (515) auf der Basis einer zuvor erstellten Datenbank; und
Bestimmen des Standorts des PC (515) als den Standort, an dem auf das Konto des Benutzers zugegriffen wird; und
als Reaktion auf eine Bestimmung, dass der Standort, an dem auf das Konto des Benutzers zugegriffen wird, ein Offline-Standort ist:
Erhalten eines Standorts eines Servicestellen-Maschinencodes des Offline-Standorts auf der Basis einer Tabelle; und
Zuordnen des Standorts des Servicestellen-Maschinencodes des Offline-Standorts zu dem Standort, an dem auf das Konto des Benutzers zugegriffen wird; und
als Reaktion auf eine Bestimmung, dass die Entfernung zwischen dem Standort des Benutzers und dem Standort, an dem auf das Konto des Benutzers zugegriffen wird, die vorgegebene Entfernungsschwelle übersteigt, Benachrichtigen (130) des Benutzers,
wobei das Benachrichtigen des Benutzers ferner Folgendes umfasst:
Senden einer ersten Informationsnachricht an eine mobile Vorrichtung des Benutzers, wobei die erste Informationsnachricht eine Option umfasst, eine Aufforderung zur Beendigung des Kontozugriffs zu senden (210);
Durchführen von Echtzeit-Verfolgung (240), um den Standort zu erhalten, an dem auf das Konto des Benutzers zugegriffen wird; und
Senden einer zweiten Informationsnachricht an die mobile Vorrichtung des Benutzers, wobei die zweite Informationsnachricht Standortinformationen darüber beinhaltet, von wo auf das Konto des Benutzers zugegriffen wird, und dem Benutzer eine Option bietet, der Polizei einen unautorisierten Kontozugriff zu melden (250), und wobei die zweite Informationsnachricht separat von der ersten Informationsnachricht ist; und
einen Speicher, der an den mindestens einen Prozessor gekoppelt ist und konfiguriert ist, Anweisungen für den mindestens einen Prozessor bereitzustellen.

9. System nach Anspruch 8, wobei der Prozessor ferner für Folgendes konfiguriert ist:
Assoziieren einer mobilen Vorrichtung mit dem Konto des Benutzers, wobei das Abrufen des gegenwärtigen Standorts des Benutzers das Lokalisieren der mit dem Konto des Benutzers assoziierten mobilen Vorrichtung beinhaltet.

10. System nach Anspruch 8:
wobei der Standort, an dem auf das Konto des Benutzers zugegriffen wird, auf der Basis eines Standorts eines Maschinencodes einer mobilen Vorrichtung, auf die zugegriffen wird, unter Verwendung von standortbezogenen Diensten (LBS) abgerufen wird.

11. System nach Anspruch 8, wobei das Benachrichtigen des Benutzers ferner Folgendes umfasst:
als Reaktion auf eine Bestimmung, dass der Benutzer die Aufforderung zur Beendigung des Kontozugriffs sendet:
Verbinden mit einer Kontobetriebsplattform; und
Sperren des Kontos des Benutzers.

12. System nach Anspruch 8, wobei das Benachrichtigen des Benutzers ferner Folgendes umfasst:
als Reaktion auf eine Bestimmung, dass der Benutzer entschied, der Polizei den unautorisierten Kontozugriff zu melden, Senden einer Nachricht an eine Meldeplattform.

13. Computerprogrammprodukt für den Schutz der Sicherheit eines Kontos, wobei das Computerprogrammprodukt in einem nicht flüchtigen computerlesbaren Speichermedium enthalten ist und Computeranweisungen für Folgendes umfasst:
Abrufen (110) eines gegenwärtigen Standorts eines Benutzers und eines Standorts, an dem auf das Konto des Benutzers zugegriffen wird;
Bestimmen (120), ob eine Entfernung zwischen dem Standort des Benutzers und dem Standort, an dem auf das Konto des Benutzers zugegriffen wird, eine vorgegebene Entfernungsschwelle übersteigt, umfassend:
als Reaktion auf eine Bestimmung, dass der Standort, an dem auf das Konto des Benutzers zugegriffen wird, ein Online-Standort ist:
Erhalten, über eine IP-Adresse eines Personalcomputers, PC, (515) eines Standorts des PC auf der Basis einer zuvor erstellten Datenbank; und
Bestimmen des Standorts des PC (515) als den Standort, an dem auf das Konto des Benutzers zugegriffen wird; und
als Reaktion auf eine Bestimmung, dass der Standort, an dem auf das Konto des Benutzers zugegriffen wird, ein Offline-Standort ist:
Erhalten eines Standorts eines Servicestellen-Maschinencodes des Offline-Standorts auf der Basis einer Tabelle; und
Zuordnen des Standorts des Servicestellen-Maschinencodes des Offline-Standorts zu dem Standort, an dem auf das Konto des Benutzers zugegriffen wird; und
als Reaktion auf eine Bestimmung, dass die Entfernung zwischen dem Standort des Benutzers und dem Standort, an dem auf das Konto des Benutzers zugegriffen wird, die vorgegebene Entfernungsschwelle übersteigt, Benachrichtigen (130) des Benutzers, wobei das Benachrichtigen des Benutzers ferner Folgendes umfasst:
Senden einer ersten Informationsnachricht an eine mobile Vorrichtung des Benutzers, wobei die erste Informationsnachricht eine Option umfasst, eine Aufforderung zur Beendigung des Kontozugriffs zu senden (210);
Durchführen von Echtzeit-Verfolgung (240), um den Standort zu erhalten, an dem auf das Konto des Benutzers zugegriffen wird; und
Senden einer zweiten Informationsnachricht an die mobile Vorrichtung des Benutzers, wobei die zweite Informationsnachricht Standortinformationen darüber beinhaltet, von wo auf das Konto des Benutzers zugegriffen wird, und dem Benutzer eine Option bietet, der Polizei einen unautorisierten Kontozugriff zu melden (250), und wobei die zweite Informationsnachricht separat von der ersten Informationsnachricht ist.

## Revendications

1. Un procédé de protection de la sécurité d'un compte, comprenant :
la récupération (110) d'un emplacement actuel d'un utilisateur et d'un emplacement dans lequel le compte de l'utilisateur est utilisé,
la détermination (120), au moyen d'un processeur, si une distance entre l'emplacement actuel de l'utilisateur et l'emplacement dans lequel le compte de l'utilisateur est utilisé dépasse un seuil de distance prédéterminé, comprenant :
en réponse à une détermination que l'emplacement dans lequel le compte de l'utilisateur est utilisé est un emplacement en ligne :
l'obtention, par l'intermédiaire d'une adresse IP d'un ordinateur personnel, PC, (515), d'un emplacement du PC (515) en fonction d'une base de données préétablie, et
la détermination de l'emplacement du PC (515) en tant qu'emplacement dans lequel le compte de l'utilisateur est utilisé, et
en réponse à une détermination que l'emplacement dans lequel le compte de l'utilisateur est utilisé est un emplacement hors ligne :
l'obtention d'un emplacement d'un code machine de point de service de l'emplacement hors ligne en fonction d'une table, et
l'affectation de l'emplacement du code machine de point de service de l'emplacement hors ligne à l'emplacement dans lequel le compte de l'utilisateur est utilisé, et
en réponse à une détermination que la distance entre l'emplacement actuel de l'utilisateur et l'emplacement dans lequel le compte de l'utilisateur est utilisé dépasse le seuil de distance prédéterminé, la notification (130), au moyen du processeur, de l'utilisateur, où la notification de l'utilisateur comprend en outre :
la transmission d'un premier message informatif à un dispositif mobile (525) de l'utilisateur, le premier message informatif contenant une option de transmission (210) d'une demande de terminaison de l'opération de compte,
l'exécution d'un suivi en temps réel (240) de façon à obtenir l'emplacement dans lequel le compte de l'utilisateur est utilisé, et
la transmission d'un deuxième message informatif au dispositif mobile (525) de l'utilisateur, où le deuxième message informatif contient des informations d'emplacement dans lequel le compte de l'utilisateur est utilisé et sollicite l'utilisateur avec une option de signalement (250) d'une opération de compte non autorisée à la police, et où le deuxième message informatif est distinct du premier message informatif.

2. Le procédé selon la Revendication 1, comprenant en outre :
l'association d'un dispositif mobile (525) au compte de l'utilisateur, où la récupération de l'emplacement actuel de l'utilisateur comprend la localisation du dispositif mobile (525) associé au compte de l'utilisateur.

3. Le procédé selon la Revendication 1,
où l'emplacement dans lequel le compte de l'utilisateur est utilisé est récupéré en fonction d'un emplacement d'un code machine d'un dispositif mobile (525) qui est actionné au moyen de services basés sur un emplacement (LBS).

4. Le procédé selon la Revendication 1, comprenant en outre, avant la récupération de l'emplacement actuel de l'utilisateur, la réception d'une demande de vérification à partir d'un point de service.

5. Le procédé selon la Revendication 1, comprenant en outre, avant la récupération de l'emplacement actuel de l'utilisateur, la détection que le compte de l'utilisateur est utilisé au niveau d'un point de service.

6. Le procédé selon la Revendication 1, où la notification de l'utilisateur comprend en outre :
en réponse à une détermination que l'utilisateur transmet la demande de terminaison de l'opération de compte :
la connexion à une plateforme d'opérations de compte, et
le verrouillage du compte de l'utilisateur.

7. Le procédé selon la Revendication 1, où la notification de l'utilisateur comprend en outre :
en réponse à une détermination que l'utilisateur a déterminé de signaler l'opération de compte non autorisée à la police, la transmission d'un message à une plateforme de signalement.

8. Un système de protection de la sécurité d'un compte, comprenant :
au moins un processeur configuré de façon à :
récupérer (110) un emplacement actuel d'un utilisateur,
récupérer un emplacement dans lequel le compte de l'utilisateur est utilisé,
déterminer (120) si une distance entre l'emplacement de l'utilisateur et l'emplacement dans lequel le compte de l'utilisateur est utilisé dépasse un seuil de distance prédéterminé, comprenant :
en réponse à une détermination que l'emplacement dans lequel le compte de l'utilisateur est utilisé est un emplacement en ligne :
l'obtention, par l'intermédiaire d'une adresse IP d'un ordinateur personnel, PC, (515), d'un emplacement du PC (515) en fonction d'une base de données préétablie, et
la détermination de l'emplacement du PC (515) en tant qu'emplacement dans lequel le compte de l'utilisateur est utilisé, et
en réponse à une détermination que l'emplacement dans lequel le compte de l'utilisateur est utilisé est un emplacement hors ligne :
l'obtention d'un emplacement d'un code machine de point de service de l'emplacement hors ligne en fonction d'un table, et
l'affectation de l'emplacement du code machine de point de service de l'emplacement hors ligne à l'emplacement dans lequel le compte de l'utilisateur est utilisé, et
en réponse à une détermination que la distance entre l'emplacement de l'utilisateur et l'emplacement dans lequel le compte de l'utilisateur est utilisé dépasse le seuil de distance prédéterminé, la notification (130) de l'utilisateur, où la notification de l'utilisateur comprend en outre :
la transmission d'un premier message informatif à un dispositif mobile de l'utilisateur, le premier message informatif contenant une option de transmission (210) d'une demande de terminaison de l'opération de compte,
l'exécution d'un suivi en temps réel (240) de façon à obtenir l'emplacement dans lequel le compte de l'utilisateur est utilisé, et
la transmission d'un deuxième message informatif au dispositif mobile de l'utilisateur, où le deuxième message informatif contient des informations d'emplacement dans lequel le compte de l'utilisateur est utilisé et sollicite l'utilisateur avec une option de signalement (250) d'une opération de compte non autorisée à la police, et
où le deuxième message informatif est distinct du premier message informatif, et
une mémoire couplée au au moins un processeur et configurée de façon à fournir des instructions au au moins un processeur.

9. Le système selon la Revendication 8, où le processeur est configuré en outre de façon à :
associer un dispositif mobile au compte de l'utilisateur, où la récupération de l'emplacement actuel de l'utilisateur comprend la localisation du dispositif mobile associé au compte de l'utilisateur.

10. Le système selon la Revendication 8 :
où l'emplacement dans lequel le compte de l'utilisateur est utilisé est récupéré en fonction d'un emplacement d'un code machine d'un dispositif mobile qui est actionné au moyen de services basés sur un emplacement (LBS).

11. Le système selon la Revendication 8, où la notification de l'utilisateur comprend en outre :
en réponse à une détermination que l'utilisateur transmet la demande de terminaison de l'opération de compte :
la connexion à une plateforme d'opérations de compte, et
le verrouillage du compte de l'utilisateur.

12. Le système selon la Revendication 8, où la notification de l'utilisateur comprend en outre :
en réponse à une détermination que l'utilisateur a déterminé de signaler l'opération de compte non autorisée à la police, la transmission d'un message à une plateforme de signalement.

13. Un produit de programme informatique destiné à la protection de la sécurité d'un compte, le produit de programme informatique étant incorporé dans un support à mémoire lisible par ordinateur non transitoire et contenant des instructions informatiques destinées à :
la récupération (110) d'un emplacement actuel d'un utilisateur et d'un emplacement dans lequel le compte de l'utilisateur est utilisé,
la détermination (120) si une distance entre l'emplacement de l'utilisateur et l'emplacement dans lequel le compte de l'utilisateur est utilisé dépasse un seuil de distance prédéterminé, comprenant :
en réponse à une détermination que l'emplacement dans lequel le compte de l'utilisateur est utilisé est un emplacement en ligne :
l'obtention, par l'intermédiaire d'une adresse IP d'un ordinateur personnel, PC, (515), d'un emplacement du PC en fonction d'une base de données préétablie, et
la détermination de l'emplacement du PC (515) en tant qu'emplacement dans lequel le compte de l'utilisateur est utilisé, et
en réponse à une détermination que l'emplacement dans lequel le compte de l'utilisateur est utilisé est un emplacement hors ligne :
l'obtention d'un emplacement d'un code machine de point de service de l'emplacement hors ligne en fonction d'une table, et
l'affectation de l'emplacement du code machine de point de service de l'emplacement hors ligne à l'emplacement dans lequel le compte de l'utilisateur est utilisé, et
en réponse à une détermination que la distance entre l'emplacement de l'utilisateur et l'emplacement dans lequel le compte de l'utilisateur est utilisé dépasse le seuil de distance prédéterminé, la notification (130) de l'utilisateur, où la notification de l'utilisateur comprend en outre :
la transmission d'un premier message informatif à un dispositif mobile de l'utilisateur, le premier message informatif contenant une option de transmission (210) d'une demande de terminaison de l'opération de compte,
l'exécution d'un suivi en temps réel (240) de façon à obtenir l'emplacement dans lequel le compte de l'utilisateur est utilisé, et
la transmission d'un deuxième message informatif au dispositif mobile de l'utilisateur, où le deuxième message informatif contient des informations d'emplacement dans lequel le compte de l'utilisateur est utilisé, et sollicite l'utilisateur avec une option de signalement (250) d'une opération de compte non autorisée à la police, et où le deuxième message informatif est distinct du premier message informatif.
